**Europäisches Patentamt**

**European Patent Office**

**Office européen des brevets**

(11) Veröffentlichungsnummer: **0 168 646**
**B1**

# EUROPÄISCHE PATENTSCHRIFT

(45) Veröffentlichungstag der Patentschrift:
**29.11.89**

(21) Anmeldenummer: **85107390.8**

(22) Anmeldetag: **14.06.85**

(51) Int. Cl.⁴: **H 02 K 15/04**

(54) Schablonengewickelte Spule.

(30) Priorität: **20.07.84 DE 3426706**

(43) Veröffentlichungstag der Anmeldung:
**22.01.86 Patentblatt 86/4**

(45) Bekanntmachung des Hinweises auf die Patenterteilung:
**29.11.89 Patentblatt 89/48**

(84) Benannte Vertragsstaaten:
**CH DE GB IT LI**

(56) Entgegenhaltungen:
**DD-A- 102 527**
**DE-A- 2 024 433**
**DE-U- 1 906 609**
**GB-A- 912 993**
**US-A- 4 047 061**

(73) Patentinhaber: **ROBERT BOSCH GMBH, Postfach 50,**
**D-7000 Stuttgart 1 (DE)**

(72) Erfinder: **Kränzier, Ernst, Oberlinstrasse 14,**
**D-7022 Leinfelden-Echterdingen (DE)**

## Beschreibung

### Stand der Technik

Die Erfindung betrifft eine schablonengewikkelte Spule nach der Gattung des Hauptanspruchs. In der DD-A 102 527 und der DE-U 1 906 609 sind Isolierschalen gezeigt, in die vorgewickelte Spulen eingelegt werden können und die anschliessend mit einem Deckel verschlossen werden. Die Trennfuge zwischen Schale und Deckel liegt dabei in der Ebene der Spule. Für den Wickelvorgang der Spulen sind diese Isolierkörper daher nicht zu gebrauchen. Ausserdem müssen die Spulenenden manuell ausserhalb der Schalen kontaktiert werden.

### Vorteile der Erfindung

Die erfindungsgemässe Spule mit den kennzeichnenden Merkmalen des Hauptanspruchs hat demgegenüber den Vorteil, dass die Spule direkt auf die Isolierstoffkästen gewickelt und die Spulenenden dort kontaktiert werden können, was automatisch ohne arbeitsintensive Handarbeit erfolgen kann. Die Kontaktierung der Spulenenden geschieht mittels an die Isolierstoffkästen angeformte Taschen, die den Vorteil haben, dass dort hinein Steckhülsen oder Hakenterminals eingesetzt werden können.

Durch die in den Unteransprüchen aufgeführten Massnahmen sind vorteilhafte Weiterbildungen Verbesserungen der im Hauptanspruch angegebenen Spulen möglich. Besonders vorteilhaft ist, dass die Taschen zugleich als Anschlag für das Beenden des Einziehens der Spule in den Polschuh ausgebildet sind.

### Zeichnung

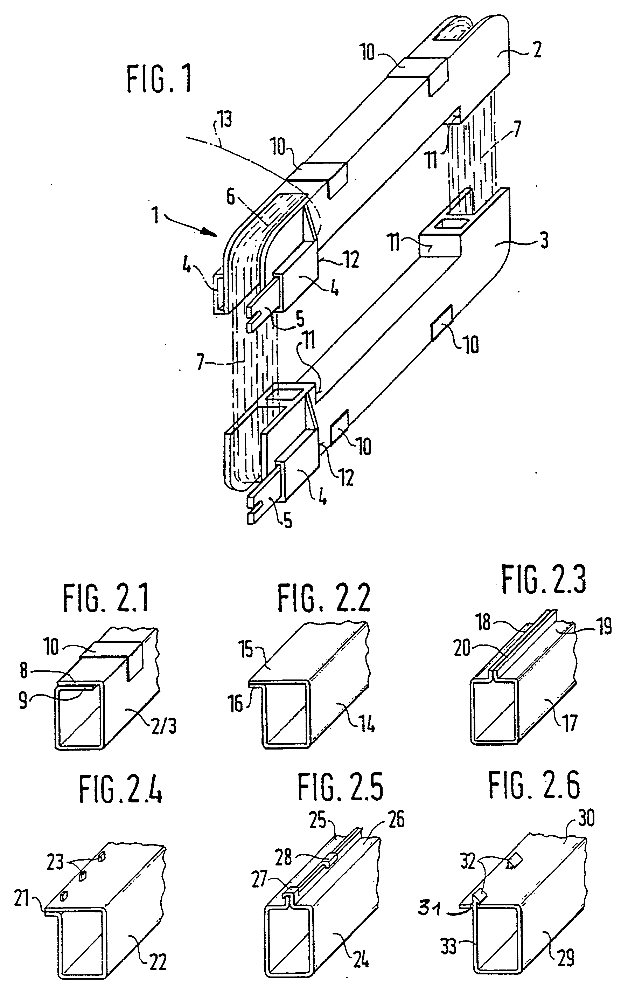

Mehrere Ausführungsbeispiele des Erfindungsgegenstandes sind in der Zeichnung dargestellt und in der nachfolgenden Beschreibung näher erläutert. Es zeigen Figur 1 eine perspektivische Darstellung einer erfindungsgemässen, schablonengewickelten Spule und Figur 2 sechs verschiedene Verschlussformen für den erfindungsgemässen Isolierstoffkasten als perspektivische Teilansicht.

### Beschreibung der Ausführungsbeispiele

Eine schablonengewickelte Spule 1 enthält zwei spiegelbildlich gestaltete Kunststoffkästen 2 und 3. Jeder dieser Kästen besitzt eine angeformte Kunststofftasche 4. Der spiegelbildlichen Gestaltung entsprechen die durchgezogen gezeichneten Taschen 4. Aus Gründen der Lagerhaltung kann es auch zweckmässig sein, die Kunststoffkästen 2 und 3 gleichgeformt auszubilden. Dies ist durch die strichpunktiert angedeutete Tasche 4 am Kunststoffkasten 2 verdeutlicht. In die Tasche 4 sind Anschlussterminals 5 eingeschoben. Sie kontaktieren den Spulenanfang und das Spulenende. An ihnen kann leicht eine entsprechende Stromversorgungsleitung angeschlossen werden. Eine Spulenwicklung 6 ist in die einander gegenübergestellten Kunststoffkästen 2 und 3 eingelegt worden, während des Wickelns mittels einer nicht dargestellten Schablone. Freibleibende Wickelköpfe 7 sind in bekannter Weise durch Bänder oder Tröpfelharz geschützt. Es können hierzu aber auch Kunststoffkappen mit Harzdurchlassöffnungen verwendet werden. Die Kunststoffkästen 2 und 3 nach Figur 1 sind in der in Figur 2.1 gezeigten Weise nach dem Wickeln verschlossen. Zwei an den Kunststoffkästen (2 oder 3) angeformte, übereinanderlegbare Deckel 8 und 9 sind mittels Klebeband 10 in ihrer Verschlussstellung festgelegt. Anschlagflächen 11 der Kunststoffkästen 2 und 3 sichern den später einzulegenden Eisenkern in seiner Lage und sorgen so für den erforderlichen Isolierabstand. Die rückwärtigen Begrenzungsflächen 12 der Taschen 4 begrenzen die Einziehbewegung der Spule 1 in einen Polschuh, der durch die strichpunktierte Linie 13 in Figur 1 lediglich angedeutet ist.

Eine Variante des Kastenverschlusses nach Figur 2.2 zeigt an einem Kasten 14 einen Deckel 15. Dieser Deckel 15 ist breiter als der Kastenboden. Dem überragenden Teil ist ein abgebogener Lappen 16 zugeordnet. Mit diesem Lappen 16 zusammen bildet der Deckelrand eine Doppellippe, die durch Ultraschall zusammengeschweisst oder auch verklebt sein kann. Eine durch Schweissen bzw. Kleben verschlossene Variante zeigt auch der Kastenverschluss nach Figur 2.3. An einem Kasten 17 sind zwei Halbdeckel 18 und 19 angeformt. Hochgezogene Ränder dieser Halbdeckel 18 und 19 bilden eine Doppellippe 20 für das Zusammenfügen. Die Kastenverschlussvariante nach Figur 2.4 zeigt eine Doppellippe 21 zu einem Kasten 22 die mittels Druckknopfverschluss 23 geschlossen werden kann. Die Grundform des Kastens 22 entspricht dabei der nach Figur 2.2. In einer Variante nach Figur 2.5 ist die Grundform des Kastens nach Figur 2.3 verwendet. An einem Kasten 24 sind Halbdeckel 25 und 26 angeformt. Deren hochgebogene Ränder bilden Nasen 27 bzw. 28, die in einer Art Verzinkung ineinandergreifen. Schliesslich ist auch eine Variante gemäss Figur 2.6 gezeigt. An einen Kasten 29 ist ein breiter Deckel 30 angeformt. Dieser Deckel 30 hat Durchbrüche 31, in die Rastnasen 32 an einer senkrechten Kastenwand 33 eingreifen und einrasten können.

## Patentansprüche

1. Schablonengewickelte Spule (1) mit Isolierkörpern (2, 3, 14, 17, 22, 24, 29) zum Einsetzen in einen Polschuh (13) eines Elektromotors, dadurch gekennzeichnet, dass sie zwei beidseits des Kerns einander gegenübergestellte, zum Spuleninneren hin geschlossene und nach aussen hin zum Wickeln der Spule (1) zu öffnende Isolierstoffkästen (2, 3, 14, 17, 22, 24, 29) umfasst, auf die die längsseitigen Wicklungsbahnen der Spule (1) aufgewickelt sind und dass an die Isolierstoffkästen (2, 3, 14, 17, 22, 24, 29) Taschen (4) zur Kontaktierung von Spulenanfang und Spulenende angeformt sind, in die je eine Steckhülse bzw. ein Hakenterminal (5) eingesetzt werden kann.

2. Schablonengewickelte Spule nach Anspruch 1, dadurch gekennzeichnet, dass die zwei Isolierstoffkästen (2, 3, ...) aus Kunststoff gefertigt und spiegelbildlich ausgebildet sind.

3. Schablonengewickelte Spule nach Anspruch 1, dadurch gekennzeichnet, dass die zwei Isolierstoffkästen (2, 3, ...) aus Kunststoff gefertigt und formgleich ausgebildet sind.

4. Schablonengewickelte Spule nach Anspruch 4, dadurch gekennzeichnet, dass die Taschen (4) seitlich an das Ende der Isolierstoffkästen (2, 3, ...) aussen angeformt sind, so dass sie als Anschlag (12) beim Einziehen der Spule (1) in den Polschuh (13) dienen.

5. Schablonengewickelte Spule nach Anspruch 1, dadurch gekennzeichnet, dass die Isolierstoffkästen (2, 3, ...) mindestens einen angeformten Deckel (8, 9, ...) zum Verschliessen des durch sie gebildeten Kanals haben.

6. Schablonengewickelte Spule nach Anspruch 5, dadurch gekennzeichnet, dass an den Isolierstoffkästen (2, 3, ...) zwei übereinander legbare Deckel (8, 9) angeformt sind, die verschliessbar und mittels Klebeband (10) festlegbar sind.

7. Schablonengewickelte Spule nach Anspruch 5, dadurch gekennzeichnet, dass die Isolierstoffkästen (14, 17) überlappende Deckelteile (15, 16; 18, 19) haben, die durch Ultraschall-Schweissen verschliessbar sind.

8. Schablonengewickelte Spule nach Anspruch 5, dadurch gekennzeichnet, dass die Isolierstoffkästen (29), überlappende Deckelteile (30) haben, die durch Rastnasen (32) und entsprechende Löcher (31) verschliessbar sind.

9. Schablonengewickelte Spule nach Anspruch 5, dadurch gekennzeichnet, dass die Isolierstoffkästen (22) überlappende Deckelteile (21) haben, die druckknopfartig (23) zusammenschliessbar sind.

10. Schablonengewickelte Spule nach Anspruch 5, dadurch gekennzeichnet, dass die Isolierstoffkästen (24) Halbdeckel (25, 26) haben, die durch Nasen (27, 28) an ihren Rändern zinkenartig verrastbar sind.

## Claims

1. Form-wound coil (1) with insulating bodies (2, 3, 14, 17, 22, 24, 29) for inserting into a pole shoe (13) of an electric motor, characterized in that it comprises two insulating-material boxes (2, 3, 14, 17, 22, 24, 29) which are disposed opposite one another on both sides of the core, are closed towards the interior of the coil and can be opened to the outside for winding the coil (1) and onto which the longitudinal-side winding courses of the coil (1) are wound, and in that pockets (4) for electrically bonding the start and end of the coil are integrally formed on the insulating-material boxes (2, 3, 14, 17, 22, 24, 29), into each of which pockets (4) a socket or a hook terminal (5) can be inserted.

2. Form-wound coil according to Claim 1, characterized in that the two insulating-material boxes (2, 3, ...) are made from plastic and are designed in mirror image.

3. Form-wound coil according to Claim 1, characterized in that the two insulating-material boxes (2, 3, ...) are made from plastic and are designed to be the same shape.

4. Form-wound coil according to Claim 4, characterized in that the pockets (4) are integrally formed laterally on the outside on the end of the insulating-material boxes (2, 3, ...) so that they serve as stop (12) when the coil (1) is drawn into the pole shoe (13).

5. Form-wound coil according to Claim 1, characterized in that the insulating-material boxes (2, 3, ...) have at least one integrally formed lid (8, 9, ...) for closing the channel formed by them.

6. Form-wound coil according to Claim 5, characterized in that two lids (8, 9) which can be laid one on top of the other are integrally formed on the insulating-material boxes (2, 3, ...), which lids (8, 9) can be closed and can be secured in position by means of adhesive tape (10).

7. Form-wound coil according to Claim 5, characterized in that the insulating-material boxes (14, 17) have overlapping Lid parts (15, 16; 18, 19) which can be closed by ultrasonic welding.

8. Form-wound coil according to Claim 5, characterized in that the insulating-material boxes (29) have overlapping lid parts (30) which can be closed by catch lugs (32) and corresponding holes (31).

9. Form-wound coil according to Claim 5, characterized in that the insulating-material boxes (22) have overlapping lid parts (21) which can be joined together in the manner of a snap fastener (23).

10. Form-wound coil according to Claim 5, characterized in that the insulating-material boxes (24) have half lids (25, 26) which are interlockable dovetail-like at their edges by lugs (27, 28).

## Revendications

1. Bobine (1) enroulée au moyen d'un gabarit, avec des corps isolants (2, 3, 14, 17, 22, 24, 29), destinée à être mise en place dans une pièce polaire (13) d'un moteur électrique, bobine caractérisée en ce qu'elle comprend deux caissons en matière isolante (2, 3, 14, 17, 22, 24, 29) placés l'un en face de l'autre des deux côtés du noyau, fermés vers l'intérieur de la bobine et s'ouvrant vers l'extérieur pour permettre l'enroulement de la bobine (1), caissons sur lesquels sont enroulées les spires des côtés longs de la bobine (1), tandis que sur ces caissons en matière isolante (2, 3, 14, 17, 22, 24, 29) sont moulées des poches (4) permettant d'établir le contact avec le début et la fin de la bobine, poches dans lesquelles peut être mis en place un contact plat ou un terminal à crochet (5).

2. Bobine enroulée au moyen d'un gabarit selon la revendication 1, caractérisée en ce que les deux caissons en matière isolante (2, 3, ...) sont réalisés en matière plastique et sont symétriques par rapport à un plan.

3. Bobine enroulée au moyen d'un gabarit selon la revendication 1, caractérisée en ce que les deux caissons en matière isolante (2, 3, ...) sont réalisés en matière plastique et sont de forme identique.

4. Bobine enroulée au moyen d'un gabarit selon la revendication 4, caractérisée en ce que les poches (4) sont moulées à l'extérieur, latéralement sur l'extrémité des caissons en matière isolante (2, 3, ...), de sorte qu'elles servent de butées (12) lors de l'introduction de la bobine (1) dans la pièce polaire (13).

5. Bobine enroulée au moyen d'un gabarit selon la revendication 1, caractérisée en ce que les caissons en matière isolante (2, 3, ...) comportent au moins un couvercle (8, 9, ...) moulé sur eux, pour fermer le canal que forment ces caissons.

6. Bobine enroulée au moyen d'un gabarit selon la revendication 5, caractérisée en ce que deux couvercles (8, 9) susceptibles d'être placés l'un sur l'autre, sont moulés sur les caissons en matière isolante (2, 3, ...), ces couvercles pouvant être fermés et fixés au moyen de bandes adhésives.

7. Bobine enroulée au moyen d'un gabarit selon la revendication 5, caractérisée en ce que les caissons en matière isolante (14, 17) comportent des parties de couvercle (15, 16; 18, 19) se chevauchant, qui peuvent être fermées par soudage aux ultrasons.

8. Bobine enroulée au moyen d'un gabarit selon la revendication 5, caractérisée en ce que les caissons en matière isolante (29) comportent des parties de couvercle (30) se chevauchant, qui peuvent être fermées à l'aide de tenons d'encliquetage (32) et de trous leur correspondant (31).

9. Bobine enroulée au moyen d'un gabarit selon la revendication 5, caractérisée en ce que les caissons en matière isolante (22) comportent des parties de couvercle (21) se chevauchant, qui peuvent être assemblées à la manière de boutons-pression.

10. Bobine enroulée au moyen d'un gabarit selon la revendication 5, caractérisée en ce que les caissons en matière isolante (24) comportent des demi-couvercles (25, 26) qui peuvent être encliquetés sur leurs bord, à la manière d'un assemblage en queue d'aronde, par des tenons (27, 28).

FIG. 1

FIG. 2.1

FIG. 2.2

FIG. 2.3

FIG. 2.4

FIG. 2.5

FIG. 2.6